Europäisches Patentamt

European Patent Office

Office européen des brevets

(19)

(11) Veröffentlichungsnummer : **0 111 271**
**B1**

(12) **EUROPÄISCHE PATENTSCHRIFT**

(45) Veröffentlichungstag der Patentschrift :
**16.04.86**

(21) Anmeldenummer : **83112119.9**

(22) Anmeldetag : **02.12.83**

(51) Int. Cl.⁴ : **F 16 L   9/12, F 16 L   9/18**

(54) **Leitungsrohr aus Kunststoff, insbesondere für Abwässer.**

(30) Priorität : **11.12.82 DE 8234897 U**

(43) Veröffentlichungstag der Anmeldung :
**20.06.84 Patentblatt 84/25**

(45) Bekanntmachung des Hinweises auf die Patenterteilung : **16.04.86 Patentblatt 86/16**

(84) Benannte Vertragsstaaten :
**DE FR GB IT NL**

(56) Entgegenhaltungen :
**DE-A- 2 840 174**
**US-A- 4 037 626**

(73) Patentinhaber : **OLTMANNS Ziegel und Kunststoffe GmbH**
**D-2905 Edewecht/Jeddeloh (DE)**

(72) Erfinder : **Dalhoff, Willi, Prof. Dr. Dipl.-Ing.**
**Baumschulenweg 2**
**D-2905 Edewecht (DE)**
Erfinder : **Othold, Rolf**
**Heinr.-v.-Gagern-Strasse 20**
**D-2900 Oldenburg (DE)**
Erfinder : **Granz, Axel, Ing. Grad.**
**Osterkampsweg 71 A**
**D-2900 Oldenburg (DE)**
Erfinder : **Oltmanns, Heinrich**
**Jeddeloher Damm 26**
**D-2905 Edewecht-Jeddeloh I (DE)**

(74) Vertreter : **Dipl.-Ing. H. Hauck Dipl.-Phys. W. Schmitz Dipl.-Ing. E. Graalfs Dipl.-Ing. W. Wehnert Dr.-Ing. W. Döring**
**Neuer Wall 41**
**D-2000 Hamburg 36 (DE)**

**Beschreibung**

Die Erfindung bezieht sich auf ein Leitungsrohr aus Kunststoff für Nennweiten über 200 mm, insbesondere Abwasserrohr, mit einem getrennten glatten Innenrohr und einem quer gewellten Außenrohr, die so ineinandergeschoben sind, daß die Wellentäler des Außenrohres im wesentlichen an der Außenseite des Innenrohres anliegen, und mit Verbindungsmitteln an den Enden zur Verbindung mehrerer Leitungsrohre zu einer Rohrleitung über eine Muffenverbindung.

Ein derartiges Leitungsrohr ist etwa in der DE-A-28 40 174 oder der US-A-4 037 626 bekanntgeworden. Das Innenrohr ist an einem Ende muffenartig aufgeweitet. Eine derartige Aufweitung ist jedoch nicht unproblematisch. Zum einen erfordert sie einen getrennten Formvorgang. Zum anderen besteht Gefahr, daß bei zu geringer Wandstärke des Innenrohrs ein Aufweiten zu Materialfehlern führt. Der besondere Vorzug des Doppelrohres ist jedoch, daß das Innenrohr sehr geringe Wanddicke haben kann und nur zur Strömungsleitung dient. Die Druckbelastung von außen wird vom gewellten Außenrohr übernommen. Das Aufweiten an einem Ende zur Bildung einer Muffe bedingt daher, daß die Wandstärke des Innenrohres einen bestimmten Wert nicht unterschreiten darf.

Eine weitere Schwierigkeit bei Verbund- oder Doppelrohren der eingangs genannten Art besteht darin, daß die Außenabmessungen der Innenrohre nicht mehr unter die genormten Abmessungen fallen, die für derartige Rohrleitungen normalerweise vorgegeben sind. Es ist zwar denkbar, die Muffe auf eine Nennweite zu erweitern, die dem Außendurchmesser des Innenrohres entspricht. In einem solchen Fall ist es jedoch nicht möglich, das Verbundrohr mit herkömmlichen Leitungsrohren zu verbinden, die z. B. einteilig aus Kunststoff oder Steinzeug gefertigt sind und die genormte Abmessungen haben.

Der Erfindung liegt daher die Aufgabe zugrunde, für eine Rohrleitung ein Leitungsrohr in Form eines Verbundrohres zu schaffen, das einfach herstellbar ist und mit herkömmlichen, standardisierten Leitungsrohren ohne weiteres verbunden werden kann.

Diese Aufgabe wird erfindungsgemäß dadurch gelöst, daß das Innenrohr über die Enden des Außenrohres überstehende, glatt zylindrische Endabschnitte aufweist, auf die eine zylindrische Hülse mit vorgegebenem Außendurchmesser geschoben und durch Schweißung und/oder Klebung befestigt ist.

Wie bei dem bekannten Leitungsrohr wird auch bei der Erfindung das Innenrohr extrudiert. Es bleibt jedoch glatt zylindrisch. Die Herstellung des Innenrohres gestaltet sich daher besonders einfach und unaufwendig.

Auf die glatten Enden, die über das Außenrohr überstehen, werden jeweils zylindrische Hülsen aufgeschoben und durch Schweißung und/oder Klebung am Innenrohr befestigt. Die Enden eines erfindungsgemäßen Leitungsrohres sind daher gleich ausgebildet. Jedes Ende kann daher in eine Muffe eines herkömmlichen Leitungsrohres, z. B. für Abwasser, eingesetzt werden. Werden mehrere erfindungsgemäße Leitungsrohre zu einer Leitung zusammengesetzt, können handelsübliche Rohrmuffen aus Kunststoff verwendet werden, die au beide Hülsen aneinanderstoßender Leitungsrohre aufgeschoben werden.

Die Erfindung hat den weiteren Vorteil, daß dem Innenrohr lediglich eine Wandstärke gegeben werden muß, wie sie für seine Funktion, d. h. Leitung eines fluiden Mediums, benötigt wird. Die herstellung des erfindungsgemäßen Leitungsrohres ist mit geringem Fertigungsaufwand zu bewerkstelligen. Das Aufbringen und Fixieren der getrennten Hülsen, die auf die Enden des Innenrohres aufgeschoben werden, ist mit einfachen Mitteln durchführbar.

Nach einer Ausgestaltung der Erfindung ist vorgesehen, daß die Hülsen einen nach innen weisenden Absatz oder radialen Flansch aufweisen, der sich gegen das freie Ende des Innenrohres legt und gegenüber dem Flansch an der Außenseite eine Anschrägung aufweisen.

Nach einer weiteren Ausgestaltung der Erfindung ist vorgesehen, daß die Enden des gewellten Außenrohres gegen die zugewandten Stirnseiten der Hülsen anliegen, vorzugsweise in eine Ausnehmung eingreifen, die durch eine Anschrägung der Hülse und dem Innenrohr gebildet ist. Die Anschrägung ermöglicht ein erleichtertes Einschieben der Rohre in eine Verbindungsmuffe.

Wie erwähnt, kann mit Hilfe der erfindungsgemäßen Leitungsrohre auf einfache Weise eine Rohrleitung gebildet werden, wobei eine getrennte Berbindungsmuffe vorgesehen wird mit zwei axial beabstandeten Ringnuten zur Aufnahme eines Dichtringes, welche auf beide aneinanderstoßende Hülsen zu verbindender Leitungsrohre aufschiebbar ist. Derartige Verbindungsmuffen sind an sich handelsübliche Bauteile und werden zum Beispiel eingesetzt, wenn aus irgendwelchen Gründen im Zuge einer Rohrleitung eine Unterbrechung vorgenommen werden muß, die anschließend wieder beseitigt wird.

Eine andere Möglichkeit, das erfindungsgemäße Verbundrohr mit herkömmlichen standardisierten Leitungsrohren gleicher Nennweite zu verbinden, besteht darin, auf das überstehende Ende des Innenrohres eine Hülse aufzuschieben und das überstehende Ende zusammen mit der Hülse zu einer Muffe aufzuweiten, deren Innendurchmesser in bekannter Weise dem Außendurchmesser des standardisierten Rohres entspricht. Auf das andere Ende des Innenrohres wird dann in der oben beschriebenen Weise eine Hülse aufgeschoben, damit das Innenrohr den Standardaußendurchmesser erreicht.

Bei einer dritten Lösungsmöglichkeit kann eine Muffe aus Kunststoff so ausgebildet werden, daß sie auf das überstehende Ende des Innenrohres aufgeschoben und daran befestigt wird.

Die Hülse wird vorzugsweise durch Klebung befestigt. Dies kann z. B. in der Weise geschehen, daß auf die miteinander zu verbindenden Flächen vorher Klebstoff aufgetragen wird. Eine erfindungsgemäße Alternative sieht vor, in axialem Abstand mindestens zwei Löcher in der Hülse vorzusehen. Die Löcher sind an der Innenseite mit Ringnuten in Verbindung, die ihrerseits durch schmale Kanäle miteinander verbunden sind. Auf diese Weise kann flüssiger Klebstoff über die eine Öffnung eingedrückt werden und sich über den Umfang verteilen. Die andere Öffnung dient zum Entweichen der Luft.

Ausführungsbeispiele der Erfindung werden nachfolgend anhand von Zeichnungen näher erläutert.

Figur 1 zeigt einen Schnitt durch einen Teil eines Endes eines Leitungsrohres nach der Erfindung.

Figur 2 zeigt im Schnitt eine Verbindung von zwei Leitungsrohren nach der Erfindung.

Figur 3 zeigt einen Schnitt durch die Verbindung eines Leitungsrohres nach der Erfindung mit einem herkömmlichen Rohr.

Figur 4 zeigt im Schnitt das Ende eines erfindungsgemäßen Leitungsrohres in einer zweiten Ausführungsform.

Figur 5 zeigt einen Schnitt durch das Ende eines erfindungsgemäßen Leitungsrohres in einer dritten Ausführungsform.

Figur 6 zeigt einen Schnitt durch ein Ende eines erfindungsgemäßen Leitungsrohres mit einer Möglichkeit zur Verklebung.

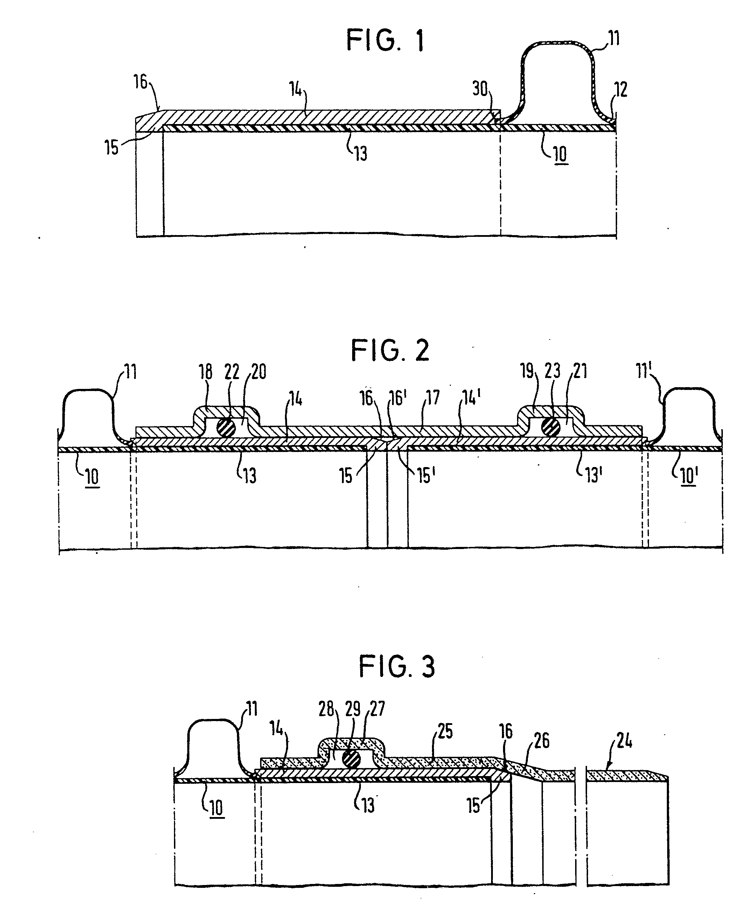

Fig. 1 zeigt teilweise ein Verbundrohr, bestehend aus einem glatt zylindrischen Innenrohr 10 aus Kunststoff und einem darauf angeordneten gewellten Rohr 11, ebenfalls aus Kunststoff. Das Innenrohr 10 ist in bekannter Weise glatt zylindrisch extrudiert. Das gewellte Rohr 11 wird in bekannter Weise durch Extrusion und nachfolgende Verformung hergestellt. Innen- und Außenrohr 10, 11 werden teleskopisch zusammengefügt, wobei die Täler 12 des Außenrohres mehr oder weniger gegen die Außenseite des Innenrohres 10 zu liegen kommen. Ferner können die Täler mit dem Innenrohr punktverschweißt werden, und eine axiale Sicherung relativ zueinander zu erhalten.

Das Innenrohr 10 steht an beiden Enden über das Außenrohr 11 um einen Abschnitt 13 über, auf den eine zylindrische Hülse 14 aufgeschoben ist. Die Hülse 14 besitzt einen nach innen weisenden radialen Bund 15 an einem Ende, der gegen die Stirnseite des Innenrohres 10 zu liegen kommt ; wie in Fig. 1 dargestellt, haben Bund 15 und Innenrohr 10 den gleichen Innendruchmesser. Dadurch erfolgt bei der Herstellung des gezeigten Rohres automatisch eine Positionierung der Hülse 14 auf dem Innenrohr 10. Die Hülse 14 besitzt außerdem an der Außenseite am freien Ende eine Anschrägung 16. An dem anderen Ende ist die Hülse an der Innenseite bei 30 angeschrägt, so daß eine ringförmige Ausnehmung gebildet ist, in die das Tal der Wellung 11 mit seinem Stirnende eingreifen kann.

Der Außendurchmesser der Hülse 14 entspricht dem Außendurchmesser genormter Leitungsrohre für Abwässer. Wie zu erkennen, ist das Innenrohr 10 mit verhältnismäßig dünner Wandung ausgeführt. Das Innenrohr 10 braucht nicht auf Druckkräfte hin ausgelegt werden, da diese ausschließlich vom Außenrohr 11 aufgenommen werden. (Gemeint sind äußere Druckkräfte, da ein nennenswerter Innendruck bei Abwässern nicht besteht bzw. nicht zulässig ist).

Das andere Ende des in Fig. 1 teilweise gezeigten Rohres ist in gleicher Weise aufgebaut, so daß sich eine Rohrverbindung entsprechend Fig. 2 herstellen läßt.

In Fig. 2 sind bei beiden Rohren gleiche Teile mit gleichen Bezugszeichen versehen, wobei jedoch in einem Falle die Bezugszeichen einen Beistrich erhalten.

Die in Fig. 2 gezeigten Verbundrohre stoßen mit den Bunden 15, 15' stumpf gegeneinander. Auf die Außenseite der zylindrischen Hülsen 14, 14' ist eine zylindrische Muffe 17 geschoben, die in einem axialen Abstand ringförmige Erweiterungen 18 bzw. 19 aufweist, wodurch Ringnuten 20, 21 gebildet sind. Die Ringnuten 20, 21 nehmen O-Dichtringe 22 bzw. 23 auf. Die Dichtringe 22, 23 kommen gegen die Außenseite der Hülsen 14, 14' zu liegen.

In Fig. 3 ist ein herkömmliches, einteiliges Leitungsrohr 24 aus Steinzeug oder Kunststoff dargestellt, daß einwandig ausgebildet ist und dementsprechend eine erhebliche Wandstärke aufweist. Das Rohr 24 ist an einem Ende zu einer Muffe 25 aufgeweitet, deren Innendurchmesser dem Außendurchmesser des Rohres 24 entspricht. Da ein abrupter Übergang bei der Aufweitung aus Materialgründen nicht erzielt werden kann, ist ein konischer Abschnitt 26 zwischen dem Rohr 24 und der Muffe 25 vorgesehen. Eine ringförmige Erweiterung 27 der Muffe 25 bildet eine Nut 28 zur Aufnahme eines Dichtringes 29. Die Hülse 14 hat, wie bereits erwähnt, den Außendurchmesser eines genormten entsprechenden Kanalrohres und kann daher passend in die Muffe 25 eingeschoben werden. Die Anschrägung 16 kommt dabei die Innenseite des konischen Abschnitts 26 zu liegen, so daß eine Einschubbegrenzung gegeben ist.

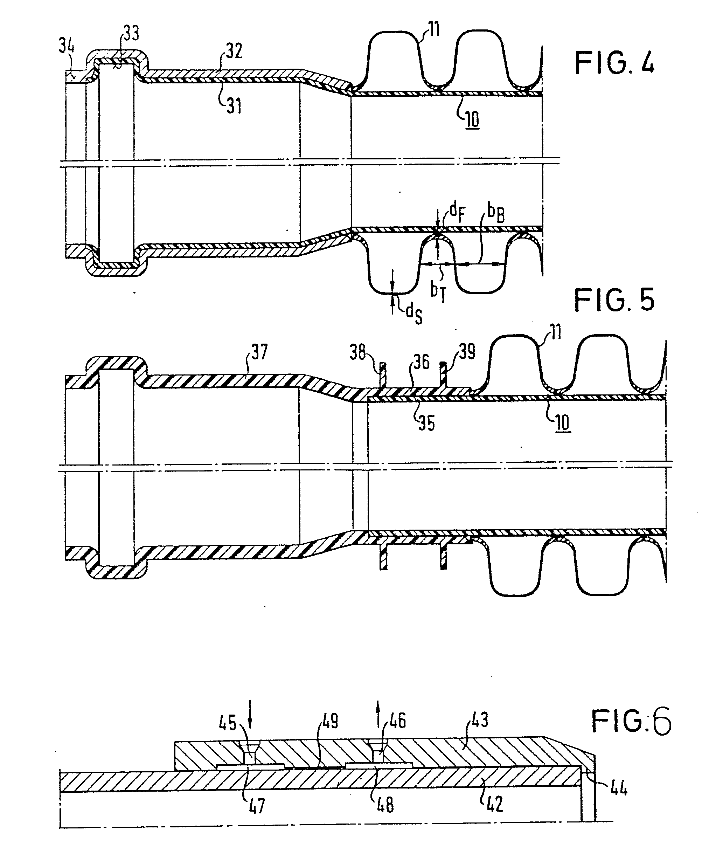

Bei der Ausführungsform nach Fig. 4 auf das überstehende Ende 31 des Innenrohres 10 ist eine Hülse 32 geschoben. Abschnitt 31 und Hülse 32 sind durch ein geeignetes Werkzeug muffenartig erweitert, so daß der Innendurchmesser der Muffe dem vorschriftsmäßigen Außendurchmesser eines Anschlußrohres entspricht, beispielsweise dem Außendurchmesser der Hülse 14 nach Fig. 1. Durch stärkeres Aufweiten von Hülse 32 und Innenrohrabschnitt 31 wird am vorderen Ende eine Ringnut 33 zur Aufnahme einer Ringdichtung geformt. Wie aus Fig. 4 ferner hervorgeht, ist auch die Hülse 32 am vorderen Ende mit einem Bund 34 versehen, gegen dessen Schulter die Stirnseite des Innenrohrabschnitts 31 anstößt. Da der Innendurchmesser des Bundes 34 und des Innenrohres 31 gleich sind, ist ein stetiger Übergang gleichen Durchmessers gebildet. Wie ferner zu ersehen, kann wiederum ein Wellental in die Ausnehmung am hinteren Ende der Hülse 32 eingreifen.

Bei der Ausführungsform nach Fig. 5 ist nur ein relativ kurzer Abschnitt 35 über das Außenrohr 11 überstehend ausgebildet. Auf den Innenrohrabschnitt 35 wird das zylindrische Ende 36 einer Kunststoffmuffe 37 geschoben. Zu diesem Zweck weist der Abschnitt 36 einen Innenabschnitt vergrößerten Durchmessers auf, wobei die Durchmesservergrößerung der Dicke des Innenrohres 10 entspricht. Die dadurch im Abschnitt 36 gebildete Schulter 36 dient daher einer Begrenzung beim Aufschieben auf das Innenrohr. Der übrige Teil der Muffe 37 ist herkömmlich und entspricht etwa der Ausbildung nach Fig. 4, jedoch in diesem Falle ist die Muffe einteilig geformt. Erwähnt werden müssen jedoch die beiden im axialen Abstand angeordneten Ringsrippen 38, 39. Sie stellen einen Schutz für das zugeordnete Ende des Außenrohres 11 dar.

Bei den Ausführungsformen nach den Figuren 4 und 5 wird zweckmäßigerweise auf das andere Ende des Innenrohres 10, das ebenfalls einen überstehenden Abschnitt aufweist, eine Hülse geschoben, die etwa der Hülse nach Fig. 1 entspricht, damit der genormte Außendurchmesser erreicht wird.

Fig. 6 zeigt einen Teil im Schnitt eines Innenrohres mit dem über das Außenrohr überstehenden Abschnitt 42, wobei eine Hülse 43 in ähnlicher Weise wie bei der Ausführungsform nach Fig. 1 aufgeschoben ist. Zu diesem Zweck besitzt die Hülse 43 wiederum einen radialen Bund 44. Wie aus Fig. 6 zu ersehen, weist die Hülse zwei axial beabstandete Durchgangslöcher 45, 46 auf, die sich nach außen etwas erweitern. An der Innenseite sind sie mit Ringnuten 47, 48 an der Innenseite der Hülse 43 verbunden. Zwischen den Ringnuten 47, 48 ist die Hülse etwas im Durchmesser vergrößert, so daß sich ein axialer Kanal 49 ergibt. Es versteht sich, daß über den Umfang der Hülse 43 mehrere Löcherpaare 45, 46 angeordnet sein können. Es versteht sich ferner, daß statt der umlaufenden Ringnut 49 mehrere in Umfangsrichtung beabstandete axiale Kanäle vorgesehen werden können.

Mit Hilfe der gezeigten Anordnung läßt sich auf einfache Weise ein maschinelles Verkleben der Hülse 43 auf dem Innenrohr 42 ermöglichen. Zu diesem Zweck wird etwa in das Loch 45 flüssiger Klebstoff eingepreßt. Die entweichende Luft strömt über die Öffnung 46 ab. Der Klebstoff kann sich über einen großen Bereich der Hülse verteilen und aushärten. Auf diese Weise ist die Hülse 43 sicher am Innenrohrabschnitt 42 befestigt.

Es hat sich gezeigt, daß bei einer bestimmten Formgebung der Wellung des Außenrohres bei einer minimalen Kunstoffmenge optimale Druckverhältnisse erzielt werden. Die Wellenberge sind breiter als die Wellentäler, wobei das Verhältnis zwischen 1,5 und 2,6 liegt. Die Wanddicke der Scheitel der Wellenberge ist geringer als die Dicke im Fuß der Täler. Dieses Verhältnis beträgt vorzugsweise zwischen 1,1 und 2,2. In Fig. 4 sind diese Dicken mit $d_S$ und $d_F$ bezeichnet. Die Breiten sind mit $b_B$ und $b_T$ bezeichnet. Die Flanken der Täler bzw. Wellenberge sind äußerst steil und annähernd senkrecht zur Achse des Rohres. Der Winkel zur Senkrechten beträgt zwischen 2 und 8°. Er ist im wesentlichen ein Entformwinkel.

**Patentansprüche**

1. Leitungsrohr aus Kunststoff für Nennweiten über 200 mm, insbesondere Abwasserrohr, mit einem quer gewellten Außenrohr (11, 11'), die einem quer gewellten Außenreohr (11, 11'), die so ineinandergeschoben sind, daß die Wellentäler (12) des Außenrohres im wesentlichen an der Außenseite des Innenrohres anliegen, und mit Verbindungsmitteln an den Enden zur Verbindung mehrerer Leitungsrohre zu einer rohrleitung über eine Muffenverbindung, dadurch gekennzeichnet, daß das Innenrohr (10, 10') über die Enden des Außenrohres (11, 11') überstehende, glatt zylindrische Endabschnitte (13, 13') aufweist, auf die eine zylindrische Hülse (14, 14') mit vorgegebenem Außendurchmeser geschoben und durch Schweißung und/oder Klebung befestigt ist.

2. Leitungsrohr nach Anspruch 1, dadurch gekennzeichnet, daß die Hülsen (14, 14') einen nach innen weisenden Absatz oder einen radialen Flansch (15, 15') aufweisen, der sich gegen das freie Ende des Innenrohres (10, 10') anlegt und gegenüber dem Flansch (15, 15') an der Außenseite eine Anschrägung (16, 16') aufweisen.

3. Leitungsrohr nach Anspruch 1 oder 2, dadurch gekennzeichnet, daß die Enden des gewellten Außenrohres (11, 11') gegen die zugewandten Stirnseiten der Hülsen (14, 14') anliegen, vorzugsweise in eine Ausnehmung eingreifen, die durch eine Anschrägung (30) der Hülse (14) und das Innenrohr (10) gebildet ist.

4. Aus mehreren Leitungsrohren bestehende Rohrleitung nach einem der Ansprüche 1 bis 3, dadurch gekennzeichnet, daß eigne getrennte Verbindungsmuffe (17) vorgesehen ist mit zwei axial beabstandeten Ringnuten (20, 21) zur Aufnahme eines Dichtringes (22, 23), welche auf beide aneinanderstoßende Hülsen (14, 14') zu verbindender Leitungsrohre aufschiebbar ist.

5. Leitungsrohr aus Kunststoff für Nennweiten über 200 mm, insbesondere Abwasserrohr, mit einem getrennten glatten Innenrohr (10, 10') und einem quer gewellten Außenrohr (11, 11'), die so ineinandergeschoben sind, daß die Wellentäler (12) des Außenrohres im wesentlichen an der Außenseite des Innenrohres anliegen, und mit Verbindungsmitteln an den Enden zur Verbindung mehrerer Leitungsrohre zu einer Rohrleitung über eine Muffenverbindung, dadurch gekennzeichnet, daß das Innenrohr an beiden Enden überstehende Endabschnitte (31) aufweist, daß auf den einen Endabschnitt eine zylindrische Hülse (14, 14') mit vor gegebenem Außendurchmesser geschoben und durch Schweißung und/oder Klebung befestigt ist, daß auf das andere Ende (31) ebenfalls eine Hülse (32) aufgeschoben ist und der andere Endabschnitt (31) und die Hülse (32) gemeinsam muffenartig aufgeweitet sind mit einem Innendurchmesser, der annähernd dem vorgegebenen Außendurchmesser der ersten Hülse (14, 14') entspricht.

6. Leitungsrohr nach Anspruch 5, dadurch gekennzeichnet, daß das freie Ende des anderen Endabschnitts (31) gegen eine Ringschulter der Hülse (32) anliegt, die an einem dickeren Endabschnitt (34) der Hülse (32) am freien Ende geformt ist, wobei der Innendurchmesser des dickeren Endabschnitts (34) gleich dem Innendurchmesser der muffenartigen Erweiterung ist.

7. Leitungsrohr nach Anspruch 5, dadurch gekennzeichnet, daß ein Abschnitt der muffenartigen Erweiterung seinerseits zu einer Ringnut (33) erweitert ist.

8. Leitungsrohr aus Kunststoff für Nennweiten über 200 mm, insbesondere Abwasserrohr, mit einem getrennten glatten Innenrohr (10, 10') und einem quer gewellten Außenrohr (11, 11'), die so ineinandergeschoben sind, daß die Wellentäler (12) des Außenrohres im wesentlichen an der Außenseite des Innenrohres anliegen, und mit Verbindungsmitteln an den Enden zur Verbindung mehrerer Leitungsrohre zu einer Rohrleitung über eine Muffenverbindung, dadurch gekennzeichnet, daß das Innenrohr (10) über das Außenrohr (11) überstehende glatt zylindrische Abschnitte aufweist, auf den einen überstehenden Abschnitt eine zylindrische Hülse (14, 14') mit vorgegebenem Außendurchmesser geschoben und durch Schweißung und/oder Klebung befestigt ist, und auf den anderen endabschnitt (35) eine Muffe (37) aufgeschoben ist, deren Innendurchmesser annähernd dem Außendurchmesser der Hülse (14, 14') ist.

9. Leitungsrohr nach Anspruch 8, dadurch gekennzeichnet, daß der andere Endabschnitt (35) gegen eine innen liegende Schulter der Muffe (37) anliegt, die an einem Abschnitt verringerten Innendurchmessers des Muffenabschnitts (36) gebildet ist, wobei der Innendurchmesser dieses Abschnitts annähernd gleich dem Innendurchmesser des Innenrohres (10) ist.

10. Leitungsrohr nach Anspruch 8, dadurch gekennzeichnet, daß der auf dem Innenrohr (10) sitzende Abschnitt (36) der Muffe (37) an der Außenseite eine oder mehrere im axialen Abstand angeordnete Ringrippen (38, 39) aufweist.

11. Leitungsrohr nach Anspruch 5 oder 8, dadurch gekennzeichnet, daß ein Talabschnitt des Außenrohres (11) gegen das Ende der aufgeweiteten Hülse (32) bzw. der Muffe (37) anliegt.

12. Leitungsrohr nach Anspruch 1, 5 oder 8, dadurch gekennzeichnet, daß die Hülse (43) bzw. der auf das Innenrohr aufgesetzte Abschnitt mindestens zwei im axialen Abstand angeordnete radiale Öffnungen (45, 46) aufweist, die an der Innenseite mit Ringnuten (47, 48) verbunden sind und zwischen den Ringnuten (47, 48) mindestens ein Verbindungskanal (49) vorgesehen ist.

13. Leitungsrohr nach einem der Ansprüche 1 bis 12, dadurch gekennzeichnet, daß die Flanken der Wellung des Außenrohres (11) annähernd senkrecht zur Rohrachse verlaufen, das Verhältnis der Dicke $d_S$ des Wellenscheitels zur Dicke $d_F$ des Wellenfußes zwischen 1,1 und 2,1 beträgt und das Verhältnis der Breite $b_B$ der Berge zur Breite $b_T$ der Täler zwischen 1,5 und 2,4 beträgt.

**Claims**

1. A line pipe of synthetic material for nominal widths above 200 mm, especially waste water pipe, comprising a separate smooth inner pipe (10, 10') and a transversely corrugated outer pipe (11, 11') which are telescoped into one another in such a manner that the wave troughs (12) of the outer pipe come to lie in close contact essentially at the outside of the inner pipe, and comprising connection means at the ends for the connection of several line pipes to form a pipeline via a socket connection, characterized in that the inner pipe (10, 10') has smooth cylindrical end portions (13, 13') projecting above the ends of the outer pipe (11, 11'), onto which a cylindrical sleeve (14, 14') of predetermined outside diameter is pusshed and fastened by welding and/or adhesion.

2. A line pipe according to claim 1, characterized in that the sleeves (14, 14') have an inward pointing shoulder or a radial flange (15, 15') which comes to lie against the free end of the inner pipe (10, 10'), and opposite the flange (15, 15') are provided with a slope (16, 16') on the outside.

3. A line pipe according to claim 1 or 2, characterized in that the ends of the corrugated outer pipe (11, 11') come to lie in close contact against the facing end faces of the sleeves (14, 14'), preferably engaging within a recess formed by a slope (30) of the sleeve (14) and the inner tube (10).

4. A pipeline consisting of several line pipes according to one of the claims 1 to 3, characterized in that a separate connection socket (17) is provided having two axially spaced annular grooves (20, 21) for the reception of a sealing ring (22, 23) and which is adapted to be pushed onto both the sleeves (14, 14') abutting each other of line pipes to be connected.

5. A line pipe of synthetic material for nominal widths above 200 mm, especially waste water pipe, comprising a separate smooth inner pipe (10, 10') and a transversely corrugated outer pipe (11, 11') which are telescoped into each other in such a manner that the wave troughs (12) of the outer pipe essentially come to lie in close contact at the outer surface of the inner pipe, and having connection means at the ends for the connection of several line pipes to form a pipeline via a socket connection, characterized in that the inner pipe is provided with projecting end portions (31) at both ends, that a cylindrical sleeve (14, 14') of predetermined outer diameter is pushed onto the one end portion and is fastened by welding and/or adhesion, that a sleeve (32) is likewise pushed onto the other end (31) and the other end portion (31) and the sleeve (32) are expanded in common line a socket to have an inside diameter approximately corresponding to the predetermined outer diameter of the first sleeve (14, 14').

6. A line pipe according to claim 5, characterized in that the free end of the other end portion (31) comes to lie against an annular shoulder of the sleeve (32) which is formed at a thicker end portion (34) of the sleeve (32) at the free end thereof, with the inner diameter of the thicker end portion (34) being equal to the inner diameter of the socket-like enlargement.

7. A line pipe according to claim 5, characterized in that a portion of the socket-like enlargement for its part is enlarged to form an annular groove (33).

8. A line pipe of synthetic material for nominal widths above 200 mm, comprising a separate smooth inner pipe (10, 10') and a transversely corrugated outer pipe (11, 11') which are telescoped into one another in such a manner that the wave troughs (12) of the outer pipe essentially come lie in close contact against the outer surface of the inner pipe, and having connection means at the ends thereof for the connection of several line pipes to form a pipeline via a socket connection, characterized in that the inner pipe (10) has smooth cylindrical portions projecting above the outer pipe (11), a cylindrical sleeve (14, 14') of a predetermined outer diameter being pushed onto the one projecting portion and fastened by welding and/or adhesion, and a socket (37) being pushed onto the other end portion (35) the inside diameter of which being approximately equal to the outer diameter of the sleeve (14, 14').

9. A line pipe according to claim 8, characterized in that the other end portion (35) comes to lie against an inwardly disposed shoulder of the socket (37) which is formed at a portion of reduced inner diameter of the socket portion (36) with the inner diameter of the said portion being approximately equal to the inner diameter of the inner pipe (10).

10. A line pipe according to claim 8, characterized in that the portion (36) of the socket (37) seated on the inner pipe (10) is provided with one or several axially spaced annular ribs (38, 39) on the outer surface thereof.

11. A line pipe according to claim 5 or 8, characterized in that a troough portion of the outer pipe (11) comes to lie in close contact against the end of the expanded sleeve (32) and the socket (37), respectively.

12. A line pipe according to claim 1, 5 or 8, characterized in that the sleeve (43) and the portion fitted onto the inner pipe, respectively, has at least two axially spaced radial openings (45, 46) which are connected on the inside thereof with annular grooves (47, 48) and in that at least one connection channel (49) is provided between the annular grooves (47, 48).

13. A line pipe according to any one of the claims 1 to 12, characterized in that the flanks of the corrugation of the outer pipe (11) are extending approximately vertically with respect to the pipe axis, the ratio of ther thickness $d_S$ of the wave apex to the thickness $d_F$ of the wave root being between 1.1 and 2.1 and the ratio of the width $b_B$ of the wave crests to the width $b_T$ of the wave troughs being between 1.5 and 2.4.

## Revendications

1. Tuyau en plastique de diamètre nominal supérieur à 200 mm, notamment pour les eaux usées, comprenant un tube intérieur (10, 10') lissen, distinct, et un tube extérieur (11, 11') à ondulations transversales, placés l'un dans l'autre de telle façon que le fond des ondulations du tube extérieur vient sensiblement en contact avec la face extérieure du tube intérieur, ainsi que des moyens placés aux extrémités pour relier plusieurs tuyaux pour former une conduite grâce à une liaison à manchon, caractérisé en ce que le tube intérieur (10, 10') présente, au-delà des extrémités du tube extérieur (11, 11'), des parties terminales (13, 13') lisses et cylindriques, sur lesquelles une douille cylindrique (14, 14') de diamètre fixé à l'avance est montée et fixée par soudage et/ou collage.

2. Tuyau selon la revendication 1, caractérisé en ce que les douilles (14, 14') présentent un décrochement dirigé vers l'intérieur, ou bien un collet radial (15, 15') qui vient en contact avec l'extrémité libre du tube intérieur (10, 10'), et présentent, sur leur face extérieure, un chanfrein (15, 15') au niveau du collet (15, 15').

3. Tuyau selon la revendication 1 ou 2, caractérisé en ce que les extrémités du tube extérieur ondulé (11, 11') viennent en contact avec les faces frontales correspondantes des douilles (14, 14'), et de préférence pénètrent dans une cavité définie par un chanfrein (30) de la douille (14) et par le tube intérieur (10).

4. Conduite formée de plusieurs tuyaux selon l'une des revendications 1 à 3, caractérisé en ce qu'il est prévu un manchon de liaison (17) distinct, comportant deux rainures circulaires (20, 21) destinées à recevoir un joint annulaire d'étanchéité (22, 23) qui peut être enfilé sur les douilles (14, 14'), qui viennent en appui l'un sur l'autre, des tuyaux à relier.

5. Tuyau en plastique de diamètre nominal supérieur à 200 mm, notamment pour les eaux usées, comprenant un tube extérieur (10, 10') lisse, distinct, et un tube extérieur (11, 11') à ondulations transversales, placés l'un dans l'autre de telle façon que le fond des ondulations du tube extérieur vient sensiblement en contact avec la face extérieure du tube intérieur, ainsi que des moyens placés aux extrémités pour relier plusieurs tuyaux pour former une conduite grâce à une liaison à manchon, caractérisé en ce que le tube intérieur présente des parties terminales (31) qui avancent des deux côtés, en ce qu'une douille cylindrique (14, 14') de diamètre extérieur fixé à l'avance est montée sur l'une des parties terminales, et fixée par soudage et/ou collage, en ce qu'une douille (32) est montée de la même manière sur l'autre partie terminale (31), et cette autre partie terminale (31) et la douille (32) sont élargies ensemble pour former un manchon ayant un diamètre intérieur qui correspond sensiblement au diamètre extérieur fixé à l'avance de la première douille (14, 14').

6. Tuyau selon la revendication 5, caractérisé en ce que l'extrémité libre de l'autre partie terminale (31) vient en contact avec un épaulement annulaire qui est formé sur une partie terminale épaissie (34) de l'extrémité libre épaissie (34) étant le même que celui de l'élargissement formant manchon.

7. Tuyau selon la revendication 5, caractérisé en ce qu'une portion de la partie élargie formant manchon présente un élargissement supplémentaire pour former une rainure circulaire (33).

8. Tuyau en plastique de diamètre nominal supérieur à 200 mm, notamment pour les eaux usées, comprenant un tube intérieur (10, 10') lisse, distinct, et un tube extérieur (11, 11') à ondulations transversales, placés l'un dans l'autre de telle façon que le fond des ondulations du tube extérieur vient sensiblement en contact avec la face extérieure du tube intérieur, ainsi que des moyens placés aux extrémités pour relier plusieurs tuyaux pour former une conduite grâce à une liaison à manchon, caractérisé en ce que le tube intérieur (10) présente des parties cylindriques lisses allant au-delà du tube extérieur (11), et sur l'une desquelles une douille cylindrique (14, 14') de diamètre prédéterminé est montée et fixée par soudage et/ou collage, alors qu'un manchon (37), dont le diamètre intérieur est voisin du diamètre extérieur de la douille (14, 14') est monté sur l'autre partie terminale (35).

9. Tuyau selon la revendication 8, caractérisé en ce que l'autre partie terminale (35) vient en appui sur un épaulement dirigé vers l'intérieur du manchon (37), cet épaulement étant formé sur une partie (36) du diamètre intérieur réduit du manchon, le diamètre intérieur de cette partie étant voisin de celui du tube intérieur.

10. Tuyau selon la revendication 8, caractérisé en ce que la partie (36) du manchon (37) qui s'appuie sur le tube intérieur (10) présente une ou plusieurs nervures (38, 39) écartées axialement sur sa face extérieure.

11. Tuyau selon l'une des revendications 5 ou 8, caractérisé en ce qu'une partie de fond d'ondulations du tube extérieur (11) vient en appui contre l'extrémité de la douille élargie (32) ou du manchon (37).

12. Tuyau selon l'une des revendications 1, 5 ou 8, caractérisé en ce que la douille (43) ou sa partie qui repose sur le tube intérieur présente au moins deux orifices (45, 46) radiaux et espacés dans le sens axial, communiquant avec des rainures annulaires (47, 48) de la face interne, au moins un canal de liaison (49) étant prévu entre ces rainures.

13. Tuyau selon l'une des revendications 1 à 12, caractérisé en ce que les flancs des ondulations du tube extérieur (11) sont à peu près perpendiculaires à l'axe du tuyau, le rapport de l'épaisseur $d_S$ aux sommets des ondulations à l'épaisseur $d_F$ aux fonds d'ondulations est comprise entre 1,1 et 2,1 et le rapport de la largeur $d_B$ des parties en saillie des ondulations à la largeur $b_T$ des parties en creux est comprise entre 1,5 et 2,4.

## FIG. 1

## FIG. 2

## FIG. 3

FIG. 4

FIG. 5

FIG. 6